# EUROPEAN PATENT SPECIFICATION

(11) **EP 3 370 580 B1**
(45) Date of publication and mention of the grant of the patent: **10.05.2023**
(21) Application number: 16788542.5
(22) Date of filing: 01.11.2016
(51) Int. Cl.: A47J 31/06, A47J 31/18, A47J 31/40, A47J 31/44

(54) **A COFFEE MACHINE USED WITH A CAPSULE**
KAFFEEMASCHINE ZUR VERWENDUNG MIT EINER KAPSEL
MACHINE À CAFÉ UTILISANT UNE CAPSULE

(30) Priority: 06.11.2015 TR 201513937
(43) Date of publication of application: 12.09.2018
(73) Proprietor: Arçelik Anonim Sirketi, 34445 Istanbul (TR)
(72) Inventor: ALPTEKIN, Ahmet, 34950 Istanbul (TR); GUNDUZ, Nihat, 34950 Istanbul (TR); CENGIZ, Osman, 34950 Istanbul (TR); AYAROGLU, Emre, 34950 Istanbul (TR); COBAN, Omer, Burak, 34950 Istanbul (TR); GERZELI, Ismail, 34950 Istanbul (TR); KARTAL, Resul, 34950 Istanbul (TR)
(86) International application number: PCT/EP2016/076272
(87) International publication number: WO 2017/076822

(56) References cited:
- WO-A1-2005/079637
- WO-A1-2009/013777
- WO-A1-2016/193381
- US-A1- 2002 023 543

## Description

The present invention relates to a coffee machine that is suitable for use with a capsule that comprises single use coffee.

Use of single-use capsules containing coffee in coffee machines is known. In this type of machines, the capsule is placed to a housing disposed in the upper portion of the body of the machine, and the coffee in the capsule is transferred to a brewing chamber that is disposed in the lower portion of the housing by the capsule being blown/opened. The coffee in the brewing chamber is mixed with water and heated by a heater preferably disposed under the brewing chamber. The brewed coffee can be automatically transferred to a cup or can be transferred by the user to a cup. The opening apparatuses that enable the folio that covers/closes the top of the capsule has sharp blades. The said sharp blades may cut the hand of the user when the user places the capsule into the capsule housing. Therefore, the sharp blades on the capsule housing pose a risk to the user. An opening apparatus that realizes the opening process of the capsule in a proper and safe manner is a desired feature for coffee machines.

In the state of the art International Patent Application No. WO2011007266, a coffee machine using capsules is disclosed.

In the state of the art United States Patent Application No. US2002023543, a coffee machine for brewing coffee powder pre-packed in a cartridge is disclosed.

In the state of the art Turkish Patent Application No. TR200100549, a coffee machine using capsules is disclosed.

The aim of the present invention is the realization of a coffee machine that can be operated in a safe manner. The coffee machine according to the invention comprises the features of independent claim 1. Preferred aspects of other embodiments of the invention are disclosed in the dependent claims.

The coffee machine realized in order to attain the aim of the present invention, explicated in the claims, comprises a seating surface that is disposed at a higher level than the opening apparatus providing the opening of the folio that closes the capsule containing the single use coffee, whereon the edges of the capsule are seated when the capsule is placed into the capsule housing, and that enables the folio to be opened by the opening apparatus by moving downwards when pressure is exerted on the capsule. By means of the seating surface of the present invention, the user is prevented from contacting the opening apparatus that enables the folio to be cut/opened. The opening apparatus contacts the folio only when the seating surface moves downward when the capsule is placed into the capsule housing and the pressure is exerted on the capsule. Thus, the capsule can be placed into the capsule housing in a safe manner.

In the present invention, after the folio closing the capsule is cut by the opening apparatus, the seating surface moves upwards and comes to a higher level than the level of the opening apparatus again. By this means, the user is prevented from contacting the opening apparatus in any way while he/she takes the used capsule from the capsule housing after the coffee in the capsule is discharged.

In an embodiment of the present invention, the upwards-downwards movement of the seating surface is realized by means of a tension means that is disposed under the seating surface, and that enables the seating surface to move upwards after the capsule is opened by being compressed by means of the pressure being exerted on the capsule.

In the present invention, one portion of the opening apparatus has a cutter that enables the folio to be cut, and the portion has a stripper that enables the cut folio to be folded. The stripper is at a lower level than the cutter, and while the capsule is being opened first the cutter then the stripper contacts the folio. Thus, one portion of the folio is cut by the cutter, and the capsule is opened by folding the part that is cut in the axis of the uncut part by means of the stripper. The stripper is positioned at a lower level than the lowermost level, in other words than the root level of the cutter. Thus, first the folio is enabled to be fully cut by the cutters, and having a problem while the folio is being folded is prevented.

In the present invention, the seating surface fully surrounds the opening apparatus. Thus, when no capsule is present in the capsule housing, the opening apparatus is disposed in the inner part of the seating surface so as to be concealed, and the user cannot contact the opening apparatus.

In another embodiment of the present invention, in order to detect whether the capsule is placed in the capsule housing or not, a sensor that the seating surface contacts during the downwards movement is used. As the capsule is placed into the capsule housing and the pressure is exerted onto the capsule, with the downwards movement of the seating surface, the seating surface contacts the sensor and triggers the sensor and thus whether the capsule is in the capsule housing or not is detected.

In the coffee machine of the present invention, by means of the seating surface that has a movable structure, the user is prevented from being wounded by contacting the opening apparatus while placing the capsule into the capsule housing in order to brew coffee.

The coffee machine realized to attain the aim of the present invention is illustrated in the attached figures, where:

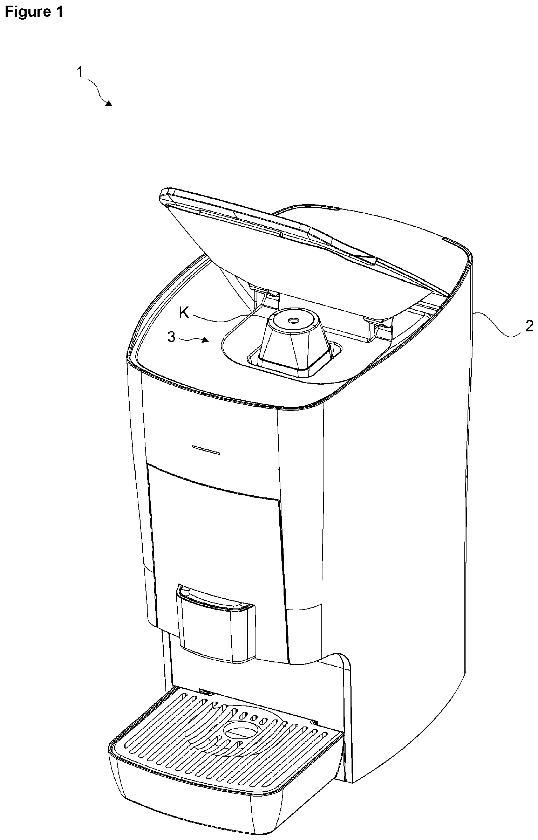

Figure 1 - is the perspective view of a coffee machine.

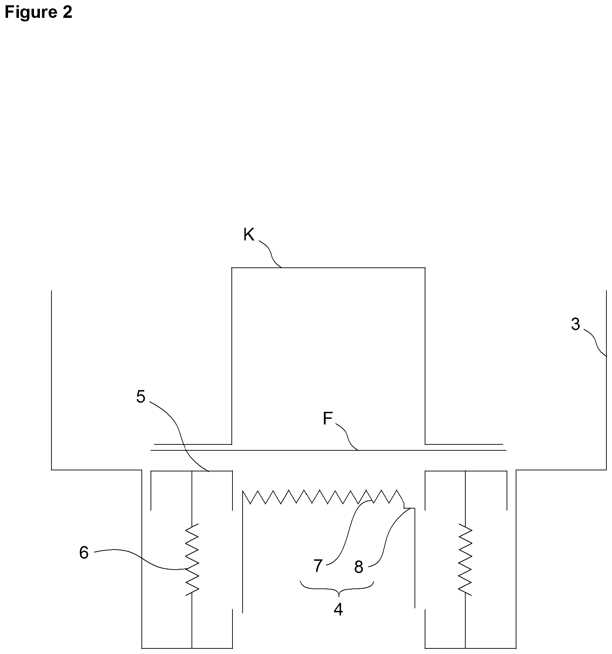

Figure 2 - is the schematic view of a capsule housing in an embodiment of the present invention.

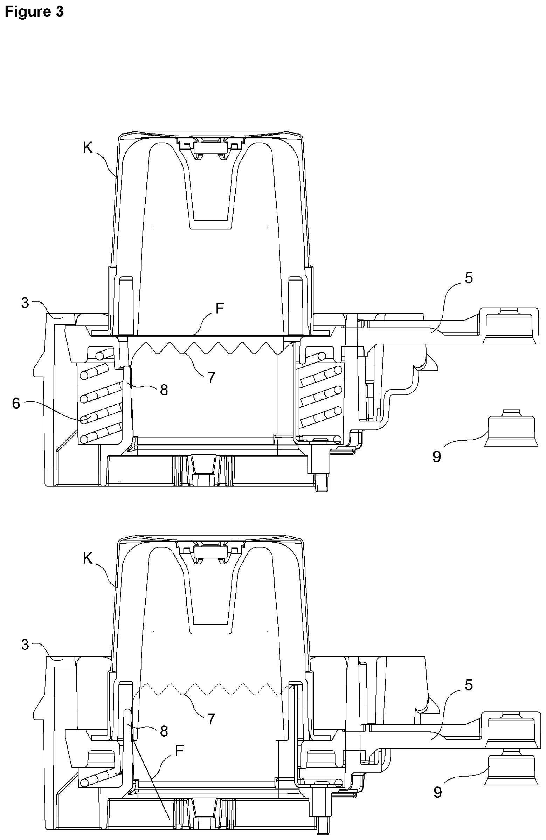

Figure 3 - is the sideways schematic view of the capsule that is placed into the capsule housing and of the capsule the folio of which is opened in an embodiment of the present invention.

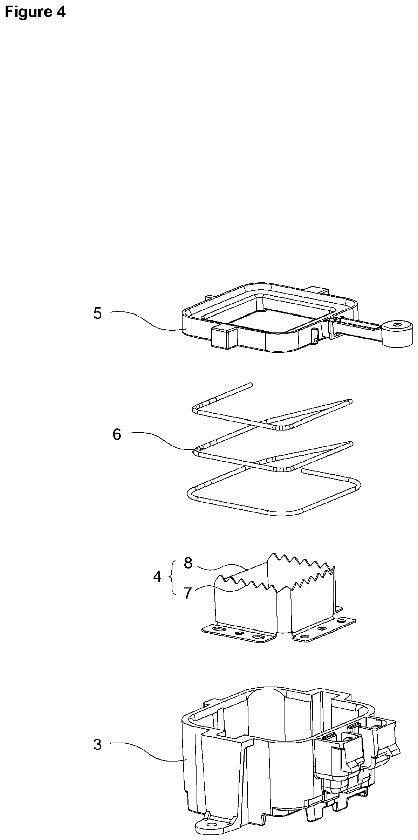

Figure 4 - is the exploded view of the capsule housing, the seating surface, the tension means and the opening apparatus related to an embodiment of the present invention.

The elements illustrated in the figures and the steps are numbered as follows:
1. Coffee machine
2. Body
3. Housing
4. Opening apparatus
5. Seating surface
6. Tension means
7. Cutter
8. Stripper
9. Sensor

### K. Capsule

### F. Folio

The coffee machine (1) is suitable for use with capsules (K) that are covered with a folio (F) and that contain coffee, and comprises a body (2); a housing (3) wherein preferably the single use capsule (K) is placed and that is disposed in the upper portion of the body (2); and an opening apparatus (4) that enables the folio (F) that closes the capsule (K) disposed on the housing (3) to be opened.

In the coffee machine (1), the coffee is brewed as the user places the capsule (K) into the housing (3), the opening apparatus (4) opens the folio (F) that closes the capsule (K) by exerting pressure on the capsule (K) and the coffee falling from the capsule (K) is transferred into a pot (not shown in the figures). The brewed coffee is then transferred into the cup from the pot. During the opening of the capsule (K), the folio (F) is enabled to be cut by the opening apparatus (4) by means of a pusher (not shown in the figure) disposed in the coffee machine (1) exerting pressure on the capsule (K).

The coffee machine (1) of the present invention comprises a seating surface (5) that is disposed on the housing (3) so as to fully surround the opening apparatus (4), that is positioned at a higher level than the vertical level of the opening apparatus (4), that the edges of the capsule (K) bear against/are seated on when the capsule (K) is placed into the housing (3), and that enables the capsule (K) to contact the opening apparatus (4) in other words to come down to the level of the opening apparatus (4) by moving downwards by means of the pressure being exerted to the capsule (K).

In the coffee machine (1) of the present invention, the seating surface (5) fully surrounds the opening apparatus (4) so as to be higher than the vertical level of the opening apparatus (4). Thus, the user who inserts his/her hand into the housing (3) is prevented from contacting the opening apparatus (4). When the capsule (K) is placed into the housing (3), the edges or the frame, if present, of the capsule (K) align(s) with and bear(s) against the seating surface (5). When the pressure is exerted on the capsule (K) in order to brew coffee, the seating surface (5) enables the capsule (K) to contact the opening apparatus (4) by moving downwards by means of the effect of the pressure. Upon contacting the capsule (K), the opening apparatus (4) enables the folio (F) that closes the capsule (K) to be cut/opened and the coffee in the capsule (K) is transferred in order to be brewed.

In the present invention, the seating surface (5) rises above the level of the opening apparatus (4) after the capsule (K) is opened and the coffee therein is discharged. After the folio (F) that closes/covers the capsule (K) is cut and the pressure on the capsule (K) is removed, the seating surface (5) moves upwards and rises above the level of the opening apparatus (4) again. By means of this embodiment, the user is prevented from contacting the opening apparatus (4) after the capsule (K) is opened/blown. By this means, it is aimed that the capsule (K) is seated onto the seating surface (5) by being placed into the housing (3), that the capsule (K) contacts the opening apparatus (4) by the downwards movement of the seating surface (5) as a result of the pressure exerted from the top of the capsule (K), that as the pressure exerted on the capsule (K) is removed the seating surface (5) moves upwards and conceals the opening apparatus (4) and that the user who takes out the capsule is prevented from reaching the opening apparatus (4).

In another embodiment of the present invention, the coffee machine (1) comprises a tension means (6) that enables the seating surface (5) to move upwards and downwards, that is compressed when the pressure is exerted on the capsule (K) that bears on the seating surface (5), and that pushes the seating surface (5) upwards so as to be preferably above the level of the opening apparatus (4) when the capsule (K) is blown/opened. The tension means (6) enables the seating surface (5) to rise to a higher level than the vertical level of the opening apparatus (4) after the capsule (K) thereon is opened. When the capsule (K) is placed on the seating surface (5) and the pressure is exerted on the capsule (K), the tension means (6) is compressed and gets shorter and thus the level of the seating surface (5) gets lower. Thus, the capsule (K) contacts the opening apparatus (4) and the folio (F) is opened. When the folio (F) is opened and the pressure on the capsule (K) is removed, the tension means (6) discharges the energy stored thereon and enables the seating surface (5) to be pushed upwards. By means of this embodiment, the user is prevented from contacting the opening apparatus (4).

In another embodiment of the present invention, the half of the opening apparatus (4) has a cutter (7) that cuts the folio (F) and the other half thereof has a stripper (8) that enables the folio (F) to be folded, and the level of the stripper (8) in the vertical direction is lower than the level of the cutter (7). In this embodiment, first one portion of the folio (F) is enabled to be cut by the cutters (7), and then the folio (F) is folded/stripped onto the uncut portion by means of the stripper (8) and the capsule (K) is opened. For example, for a square capsule (K), the opening apparatus (4) may have four edges one of which may be the stripper (8) and other three edges may be the cutters (7). The capsule (K) folio (F) is first cut from three edges by the cutters (7), then is opened from the uncut edge by means of the stripper (8). In the same manner, for a circular capsule (K), the opening apparatus (4) is in form of a circle and one portion of the circle is the cutter (7) and one portion is the stripper (8). By means of this embodiment, the folio (F) that closes the capsule (K) is enabled to be opened in a proper way.

In the present invention, the uppermost level of the stripper (8) in the vertical direction is lower than the lowermost level of the cutters (7). The coffee is prevented from remaining on the folio (F) when the capsule (K) is opened by preventing the stripper (8) from folding the folio (F) before the cutters (7) fully cut the folio (F).

In another embodiment of the present invention, the angle between two successive cutters (7) is almost the right angle. In this embodiment, in order to efFiciently open the folio (F), the angle between two successive cutters (7) is adjusted as 90 degrees. As a result of a number of experiments, the producer has determined that in order to cut the folio (F) without tearing, the angle between the cutters (7) needs to be almost 90 degrees. By means of the cutters (7) being produced in this manner, the opening apparatus (4) is enabled to perform a shorter stroke distance in order to cut the folio (F). Moreover, by producing the cutters (7) in a zigzag shape, the folio (F) is enabled to be opened by being cut from many points at the same moment.

In the present invention, the seating surface (5) preferably fully surrounds the opening apparatus (4). Thus, the level of safety is improved by preventing the user from accessing the cutters (7) in any way.

In another embodiment of the present invention, the coffee machine (1) comprises a sensor (9) that is triggered by the downwards movement of the seating surface (5) and that detects whether the capsule (K) is placed into the housing (3) or not. In this embodiment, whether the capsule (K) is placed into the housing (3) or not is detected by means of a sensor (9) that is not positioned in the housing (3) so as to be seen by the user, but that is triggered by the downwards movement and the contact of the seating surface (5). Thus, the sensor (9) can be concealed in the body (2) so as not to be seen by the user.

In another embodiment of the present invention, the coffee machine (1) is suitable to brew Turkish coffee. The coffee is brewed in the brewing chamber and is transferred into the cup.

In the coffee machine (1) of the present invention, children are prevented from accessing the cutters (7) of the opening apparatus (4) and from being wounded by means of the seating surface (5), and the user safety is improved. The upwards-downwards movement of the seating surface (5) is provided by using the state of the art tension means (6) such as the spring, etc., thus the cost advantage is maintained. Moreover, by positioning the stripper (8) that enables the folio (F) to be folded at a lower level than the cutters (7), the folio (F) is first cut, and then folded to be opened.

## Claims

1. - A coffee machine (1) that is suitable for use with capsules (K) that contain coffee and that comprise a folio to close the capsule, said coffee machine **comprising** a body (2); a housing (3) for placing a single use capsule (K), the housing (3) being disposed in the upper portion of the body (2); an opening apparatus (4) for opening the capsule (K) placed on the housing (3) by cutting the folio (F); a seating surface (5) for bearing/seating the edges of the capsule (K) when the capsule (K) is placed into the housing (3), wherein the seating surface is configured to fully surround the opening apparatus (4) and wherein the seating surface (5) is adapted to move downwards by means of the pressure exerted on the capsule (K) such that the folio (F) contacts the opening apparatus (4), and the seating surface is further adapted to move upwards into an upward position above the level of the opening apparatus (4) when the pressure on the capsule (K) is removed, after the capsule is opened and the coffee contained therein is discharged such that the seating surface (5) is further adapted to conceal the opening apparatus (4) when the seating surface (5) is in the upward position, **characterized by** the opening apparatus being configured to enable the coffee contained in the capsule (K) to be transferred for brewing, the opening apparatus consisting of a cutter (7) configured to cut the folio (F) and a stripper (8) configured to fold the folio, wherein the stripper (8) is below the lowermost level of the cutter (7).

2. - A coffee machine (1) as in Claim 1, **characterized by** a tension means (6) configured to enable the seating surface (5) to move upwards and downwards, that is compressed when the pressure is exerted on the capsule (K) bearing on the seating surface (5), and that is configured to push the seating surface (5) upwards when the capsule (K) is blown/opened.

3. - A coffee machine (1) as in any one of the above claims, **characterized by** a sensor (9) that is adapted to be triggered by the downwards movement of the seating surface (5) and to detect whether the capsule (K) is placed into the housing (3) or not.

## Patentansprüche

1. - Eine Kaffeemaschine (1), die für die Verwendung mit Kapseln (K) geeignet ist, die Kaffee enthalten und die eine Folie zum Verschließen der Kapsel umfassen; **umfasst** einen Körper (2); ein Gehäuse (3) zum Platzieren einer Einwegkapsel (K), wobei das Gehäuse (3) im oberen Abschnitt des Körpers (2) angeordnet ist; eine Öffnungsvorrichtung (4) zum Öffnen der auf dem Gehäuse (3) platzierten Kapsel (K) durch Schneiden der Folie (F); eine Auflagefläche (5) zum Lagern/Aufsetzen der Ränder der Kapsel (K), wenn die Kapsel (K) in das Gehäuse (3) eingesetzt wird, wobei die Sitzfläche so konfiguriert ist, dass sie die Öffnungsvorrichtung (4) vollständig umgibt, und wobei die Auflagefläche (5) angepasst ist, sich mittels des auf die Kapsel (K) ausgeübten Drucks nach unten zu bewegen, so dass die Folie (F) die Öffnungsvorrichtung (4) berührt, und die Auflagefläche ferner angepasst ist, um sich nach oben in eine obere Position über dem Niveau der Öffnungsvorrichtung (4) zu bewegen, wenn der Druck auf die Kapsel (K) entfernt wird, nachdem die Kapsel geöffnet ist und der darin enthaltene Kaffee ausgetragen ist, so dass die Auflagefläche (5) weiter angepasst ist, um die Öffnungsvorrichtung (4) zu verdecken, wenn sich die Auflagefläche (5) in der oberen Position befindet, **gekennzeichnet ist sie durch** die Öffnungsvorrichtung (4), die so konfiguriert ist, dass es ermöglicht wird, dass der in der Kapsel (K) enthaltene Kaffee zum Brühen transferiert wird, wobei die Öffnungsvorrichtung aus einem Schneider (7), der zum Schneiden der Folie (F) konfiguriert ist, und einem Abstreifer (8), der zum Falten der Folie konfiguriert ist, besteht, wobei sich der Abstreifer (8) unterhalb der untersten Ebene des Schneiders (7) befindet und wobei die Auflagefläche (5) die Öffnungsvorrichtung (4) vollständig umgibt.

2. - Eine Kaffeemaschine (1), wie in Anspruch 1 aufgeführt, **ist dadurch gekennzeichnet, dass** ein zur Auf- und Abwärtsbewegung der Auflagefläche (5) ausgebildetes Zugmittel (6) komprimiert wird, wenn der Druck auf die auf der Auflagefläche (5) aufliegende Kapsel (K) ausgeübt wird, und das so konfiguriert ist, dass es die Auflagefläche (5) nach oben drückt, wenn die Kapsel (K) aufgeblasen/geöffnet wird.

3. - Eine Kaffeemaschine (1), wie in einem der vorherigen Ansprüchen aufgeführt, **ist dadurch gekennzeichnet, dass** ein Sensor (9) durch die Abwärtsbewegung der Auflagefläche (5) auslösbar ist und erfasst, ob die Kapsel (K) in das Gehäuse (3) eingelegt ist oder nicht.

## Revendications

1. - Une machine à café (1) qui est appropriée pour être utilisée avec des capsules (K) qui contiennent du café et qui comprennent un folio pour fermer la capsule, ladite machine à café **comprenant** un corps (2) un logement (3) pour placer une capsule à usage unique (K), le logement (3) étant disposé dans la partie supérieure du corps (2) ; un appareil d'ouverture (4) pour ouvrir la capsule (K) placée sur le logement (3) en coupant le folio (F) ; une surface d'appui (5) pour supporter/appuyer les bords de la capsule (K) lorsque la capsule (K) est placée dans le logement (3), dans lequel la surface d'appui est configurée pour entourer complètement l'appareil d'ouverture (4) et dans lequel la surface d'appui (5) est adaptée pour se déplacer vers le bas au moyen de la pression exercée sur la capsule (K) de sorte que le folio (F) entre en contact avec l'appareil d'ouverture (4), et la surface d'assise est en outre adaptée pour se déplacer vers le haut dans une position haute au-dessus du niveau de l'appareil d'ouverture (4) lorsque la pression sur la capsule (K) est supprimée, après que la capsule est ouverte et que le café contenu dans celle-ci est déchargé de sorte que la surface d'assise (5) est en outre adaptée pour cacher l'appareil d'ouverture (4) lorsque la surface d'assise (5) est dans la position haute, **caractérisé par** le dispositif d'ouverture est configuré pour permettre au café contenu dans la capsule (K) d'être transféré pour être infusé, le dispositif d'ouverture étant constitué d'un dispositif de coupe (7) configuré pour couper le feuillet (F) et d'un dispositif de dépouillement (8) configuré pour plier le feuillet, dans lequel le dispositif de dépouillement (8) est en dessous du niveau le plus bas du dispositif de coupe (7), et dans lequel la surface d'assise (5) entoure entièrement le dispositif d'ouverture (4).

2. - Une machine à café (1) comme dans la déclaration 1, **caractérisée par** un moyen de tension (6) configuré pour permettre à la surface d'assise (5) de se déplacer vers le haut et vers le bas, qui est comprimé lorsque la pression est exercée sur la capsule (K) portant sur la surface d'assise (5), et qui est configuré pour pousser la surface d'assise (5) vers le haut lorsque la capsule (K) est soufflée/ouverte.

3. - Une machine à café (1) comme dans l'une quelconque des déclarations précédentes, **caractérisée par** un capteur (9) qui est adapté pour être déclenché par le mouvement vers le bas de la surface d'assise (5) et pour détecter si la capsule (K) est placée dans le logement (3) ou non.
